# EUROPEAN PATENT APPLICATION

(11) **EP 4 385 709 A1**
(43) Date of publication of application: **19.06.2024**
(21) Application number: 22213121.1
(22) Date of filing: 13.12.2022
(51) Int. Cl.: B29C 64/112, B29D 11/00

(54) **METHOD FOR PRODUCING A THREE-DIMENSIONAL OPTICAL STRUCTURE AND THREE-DIMENSIONAL OPTICAL STRUCTURE**

(71) Applicant: Meta Platforms Technologies, LLC, Menlo Park, CA 94025 (US)
(72) Inventor: Sulimenko, Pavlo Andriyovych, 5656AE Eindhoven (BE)
(74) Representative: Murgitroyd & Company

(57) **Abstract**

Method for producing a three-dimensional optical structure, preferably a lens, comprising a predetermined optical power and a predetermined shape is proposed, wherein in a first step a virtual layer of the optical structure is determined, wherein the virtual layer comprises the shape and/or contour of the optical structure, wherein a dithering pattern is applied to the virtual layer such that a droplet density in a first region is greater than a droplet density in a second region, wherein the droplet density in the first region is preferably maximal, wherein the droplet density in the second region is preferably minimal, wherein in a second step the virtual layer is vertically stacked until the predetermined optical power of the optical structure is reached to create a virtual printing pattern, wherein in a third step the optical structure is printed according to the virtual printing pattern by depositing one or more layers of printing ink through targeted placement of droplets of printing ink at least partially side by side and/or at least partially on top of each other.

## Description

### BACKGROUND

The present invention relates to a three-dimensional optical structure, for example a lens, comprising a predetermined optical power and a predetermined shape. Such optical structures are well-known, e.g. as ophthalmic lenses for spectacles and/or displays.

With the rise of rapid prototyping and in particular additive manufacturing, it has become clear that such optical structures can advantageously be produced by additive manufacturing. Not only is additive manufacturing an easy way to finely tune optical functions of the optical structures during the production process, but the optical structures may also be specially adapted for the integration of functional components such as e.g. waveguides and/or displays.

Two particularly suitable and well-known technologies for producing optical structures are injection molding and three-dimensional printing. Three-dimensional printing is usually carried out by a printer comprising a print head with at least one nozzle which ejects droplets of printing ink towards a substrate. By depositing a multitude of droplets next to each other, a layer is created. The printing ink solidifies and the process may be repeated to deposit multiple layers at least partially on top of each other.

The printing ink is deposited according to a predetermined printing pattern. According to the state of the art, this printing pattern is created by virtually dividing the predetermined shape of the optical structure into a plurality of superimposed horizontal slices, in particular of the same thickness. The predetermined shape of the optical structure is hence built up by a multitude of horizontal slices stacked upon each other. In particular when printing lenses, the lateral extension of those slices usually decreases from the bottom to the top. At the edges, staircase-like irregularities are thus formed. For lenses with regular optical powers, e.g. around 1 dpt and more, those irregularities are barely noticeable and may be further reduced by applying additional compensation methods for smoothing the shape of the optical structure.

One such approach is applying a dithering algorithm or pattern to the horizontal slices. This means that locations in which no droplets are to be deposited are, in particular randomly, distributed over the layer. Thus, a smoothing of the (physical) shape of the optical structure as printed may be achieved.

Yet, the known approaches fail when printing lenses with relatively low optical power, in particular less than around 0.5 dpt. As at least the curved parts of such lenses typically comprise only few layers, the distance between the edges of subsequent layers are significantly distanced from each other. Thus, the above-described so-called "staircase effect" is clearly noticeable for such low-power lenses.

### SUMMARY

Hence, it is a purpose of the present invention to provide a method for producing three-dimensional optical structures by means of three-dimensional printing even if the optical structure comprises a low optical power and/or is relatively thin.

According to an aspect of the present invention, there is provided a method for producing a three-dimensional optical structure, comprising a predetermined optical power and a predetermined shape, wherein in a first step a virtual layer of the optical structure is determined, wherein the virtual layer comprises the shape and/or contour of the optical structure, wherein a dithering pattern is applied to the virtual layer such that a droplet density in a first region is greater than a droplet density in a second region, wherein the droplet density in the first region is preferably maximal, wherein the droplet density in the second region is preferably minimal, wherein in a second step the virtual layer is vertically stacked until the predetermined optical power of the optical structure is reached to create a virtual printing pattern, wherein in a third step the optical structure is printed according to the virtual printing pattern by depositing one or more layers of printing ink through targeted placement of droplets of printing ink at least partially side by side and/or at least partially on top of each other.

Optionally, the optical structure is a lens.

The method according to the present invention advantageously allows for a three-dimensional printing of an optical structure comprising a relatively low optical power and/or a relatively low thickness without substantially exhibiting a staircase effect.

The embodiments and advantages described in conjunction with this subject-matter of the present invention also apply to the further subject-matter of the present invention and vice versa.

According to one aspect of the present invention, a horizontal slicing as known from the state of the art is replaced instead by a virtual dithered layer.

Optionally, dithering is applied such that the droplet density is maximal in a first region of the virtual layer and preferably steadily decreases towards a second region of the virtual layer. Preferably, the droplet density in the second region is minimal.

The person skilled in the art knows that dithering - or dither - is a method, for example an algorithm, which basically applies noise in order to randomize an quantization error in order to prevent patterns on a larger scale. Dither(ing) is widely used e.g. in the processing of digital audio and video data and the converting of images. Furthermore, as initially described, it is known to apply dithering as an error compensation mode to horizontally sliced virtual layers in three-dimensional printing as known from the state of the art.

Preferably, this means that, in particular random, positions in a horizontally sliced layer are designated to remain empty, i.e. no droplet is to be deposited at that particular position. The deposited droplets in immediate vicinity hence have space to distribute and/or coalesce more evenly, thus achieving a smoothing effect on the optical structure. Hence, according to the present invention, dithering is not (primarily) used as a mechanism for error compensation, but as a means to provide a virtual printing pattern.

Within the context of the present invention, the predetermined shape of the optical structure preferably designates the three-dimensional form of the optical structure, whereas the contour of the optical structure preferably means the two-dimensional form of optical structure, e.g. in particular the shape of the edge(s) of the optical structure.

Furthermore, the present invention is preferably aimed at lenses, in particular ophthalmic lenses, but it is not restricted thereto. Instead, the proposed method may be applied to various types of optical structures and in particular symmetrical and/or asymmetrical shapes and/or contours. Nevertheless, since in particular circular lenses are rotationally symmetric around their center and hence easy to describe, a preferable method according to the present invention is often referenced here with respect to such (circular) lenses. This is done merely for illustrative purposes. The person skilled in the art acknowledges that any positional and/or directional designations apply accordingly for optical structures of different shapes and/or contours.

The person skilled in the art further understands that theoretically, the optical structure may only require a single virtual (dithered) layer. Yet, in practice the optical structure preferably requires the (vertical) stacking of at least two virtual layers, in particular a plurality of virtual layers. The idea of the present invention now lies within the concept of stacking preferably substantially identical virtual layers upon each other until the predetermined optical power and/or the predetermined thickness of the optical structure is achieved. More preferably, the curved shape, for example of a lens, is achieved by means of the dithering pattern. In particular for rotationally symmetric optical structures such as a circular lens, the dithering pattern is a substantially rotationally symmetric pattern, i.e. the droplet density is radially decreased (for the case of a convex lens) or increased (for the case of a concave lens) towards the outer edge, i.e. the circumference in case of a circular lens. Preferably, the virtual layers comprise at least the same contour and/or the same center, wherein the same contour more preferably means the same circumference and/or diameter.

Preferably, the optical structure is a three-dimensional structure intended to at least partially transmit light. The optical structure is more preferably intended for use with the visible spectrum. More preferably, the optical structure is at least partially optically translucent and/or transparent, in particular at least for a predetermined range of wavelengths, such as the visible spectrum. In particular, the optical structure may be a lens and even more preferably an ophthalmic lens. Ophthalmic lenses comprise concave, convex, biconcave, biconvex, plano-concave, plano-convex and meniscus lenses. Because it is a very common and easily explainable type of lens, a (plano-)convex lens is often used as an example throughout the present application. This is done merely for illustrative purposes. Ophthalmic lenses in the sense of the present invention also comprise multifocal lenses as well as gradient-index lenses. Ophthalmic lenses comprise for example spectacle lenses or other lenses that are used in eyewear. The optical structure may comprise a waveguide or a display.

The three-dimensional optical structure is produced by means of three-dimensional printing, which is an additive manufacturing technique wherein droplets of printing ink are ejected from at least one nozzle of at least one print head. In the context of the present invention, printing of an optical structure preferably comprises building up the structure from droplets of printing ink and more preferably from layers of printing ink. These layers are obtained through a targeted placement of droplets of printing ink according to predetermined print data. The print data preferably comprises at least the virtual printing pattern. More preferably, during printing of the at least one layer, the droplets are deposited at least partially side by side and preferably at least partially on top of each other, wherein even more preferably successive layers of printing ink are a least partially printed one above the other in consecutive printing steps.

A well-known three-dimensional printing technique, which may be used within the context of the present invention, is multi-pass printing. In a multi-pass printing mode, a layer is divided into sublayers. During each pass of the print head (e.g. a movement in one linear direction, wherein preferably moving back in the opposite direction constitutes another pass), a sublayer is printed. Thus, a layer is printed in multiple substeps, wherein during each substep, a sublayer is printed. Each sublayer may be cured after printing or a curing step is performed after a predetermined number of substeps. Within the context of the present invention, the terms "layer" and "sublayer" are preferably interchangeable, i.e. in particular multi-pass mode is applicable when printing the optical structure.

Preferably, the printing ink used for printing the (three-dimensional) optical structure comprises a translucent or transparent component. More preferably, the printing ink comprises at least one photo-polymerizable component. The at least one photo-polymerizable component is most preferably a monomer that polymerizes upon exposure to radiation, e.g. ultra-violet (UV) light, infra-red (IR) light and/or heat.

The deposited droplets are preferably pin cured, i.e. at least partially cured. More preferably, the viscosity of the printing ink is increased during curing. Pin curing is most preferably carried out after deposition of the respective droplet or after deposition of an entire (sub)layer or only parts of a layer. Alternatively, pin curing is carried out at certain intervals, e.g. after printing of every second (sub)layer. Preferably, curing may comprise actively and/or passively curing the printing ink, wherein in particular passively curing includes letting the droplets dry or cure, i.e. generally speaking solidify, over time, whereas actively curing in particular includes acting upon the deposited droplets, e.g. submitting the droplets to additional energy such as electromagnetic radiation, in particular UV and/or IR light, and/or thermal energy, in particular heat.

According to a preferred embodiment of the present invention, the first region is the center of the virtual layer or the outer edges of the virtual layer and/or wherein the second region is the outer edges of the virtual layer or the center of the virtual layer. The person skilled in the art acknowledges that the case of the first region being the center and the second region being the outer edges, e.g. in particular the region around the outermost circumference, describes a convex lens, whereas the case of the first region being the outer edges and the second region being the center describes a concave lens.

Preferably, any kind of lens may be seen as superpositions of those cases. The person skilled in the art also acknowledges that the present invention is advantageously applicable to freeform lenses and that the teachings apply analogously.

According to a further embodiment of the present invention, the droplet density in the second region is greater than 0%, preferably greater than 10%, more preferably greater than 30% of a maximal droplet density and/or wherein the droplet density in the first region is greater than 80%, preferably greater than 90%, more preferably greater than 95% and in particular about 100% of the maximal droplet density. Since a droplet density of 0% means that no droplets are deposited in such a location, the droplet density is preferably always greater than 0%. Furthermore, a minimal droplet density within the context of the present invention means a droplet density that still results in a solid optical structure and not only in a pattern of single droplets without coherence and/or connection with each other. The minimal droplet density preferably depends on the properties of the printing ink used for the three-dimensional printing process. The maximal droplet density is preferably chosen according to the conditions of each single case. Preferably, the droplet density changes steadily from the first region to the second region.

The inventors of the present invention have found that for a standard printing ink, the minimal droplet density for the second region is 10%, preferably 20%, more preferably 30%. Hence, the dithering pattern and/or algorithm is applied such that the droplet density is maximal, e.g. around 100%, _{[A1]}in the first region and decreases, in particular steadily, in a direction towards the second region until it reaches the minimal droplet density at the outer edge of the optical structure's contour. In the case of a circular convex lens, this means that the droplet density decreases steadily from the center in a radially outwards direction.

According to a preferred embodiment of the present invention, the optical power of the optical structure is smaller than or equal to 0.5 dpt. The interval between 0 dpt and around 0.5 dpt is what is preferably referred to as a "low (optical) power" within the context of the present invention. This may further be differentiated into an interval between 0 dpt and around 0.3 dpt, which is preferably designated as "very low (optical) power" and around 0.3 dpt and 0.5 dpt, which is designated as low (optical) power. The inventors have found out that the method according to the present invention is particularly suited for such (very) low power lenses. In particular, due to the stacking of the virtual layer(s), for an optical power above around 0.5 dpt, the resulting optical structure will be relatively thick and hence relatively heavy, so that an horizontal slicing approach is preferable for such optical structures.

According to a further preferred embodiment of the present invention, before the first step a base optical structure, preferably a base lens, is provided and a difference between a shape and/or optical power of the base optical structure and a predetermined shape and/or optical power of the base optical structure is measured, wherein the predetermined shape and/or the predetermined optical power of the optical structure is chosen such that the measured difference is compensated, wherein preferably the optical structure is printed on top of the base optical structure or is printed separately and placed on the base optical structure. In particular, the optical structure may be fixed to the base optical structure, e.g. by means of an adhesive layer, which is preferably three-dimensionally printed upon the base optical structure. It is hence advantageously possible to use the method according to the present invention to correct a given base optical structure and/or to fine-tune a base optical structure. Usually, the measured difference, which may also be referred to as an error (profile), is so small that if an optical structure used for compensating the error and produced by a method according to the state of the art, the resulting optical structure, i.e. the optical structure together with the base optical structure, will exhibit the initially described staircase effect, which is detrimental to the optical quality of the resulting optical structure. Hence, in this case, the method according to the present invention may in particular be used as a multilayer-volume correction. Preferably, the base optical structure is a lens blank.

According to a still further preferred embodiment of the present invention, the base optical structure is at least partially three-dimensionally printed and/or injection-molded. It is thus advantageously possible to produce a customized base optical structure quickly and with well-known methods. In particular, because the optical structure may be applied to the base optical structure as a correction profile, less time and effort may be spent on the perfection of the base optical structure's shape, hence lowering the costs and/or time for its production.

According to another preferred embodiment of the present invention, at least one of the virtual layers is shifted, for example, rotated around the center of the optical structure and/or the virtual layer, with regard to the other virtual layers during the second step. The person skilled in the art understands that this only applies if the virtual printing pattern comprises more than one virtual layer, which will be the case for the prevalent majority of cases. Preferably, the virtual layers are substantially identical apart from their orientation to each other. More preferably, the virtual layers comprise the same contour, for example the same diameter, and/or the same center. By shifting the layers relative to each other, it is advantageously ensured that the empty positions, i.e. the positions at which no droplets are to be deposited, of the layers' dithering patterns do not coincide, such that optical and/or material defects of the optical structure are avoided.

According to still another preferred embodiment of the present invention, at least one non-dithered virtual layer is interposed between the stacked virtual layer. Preferably, such a non-dithered virtual layer is created by means of horizontal slicing as known from the state of the art. More preferably, only one or two or three such non-dithered layers are used. In particular, a non-dithered layer may be a full layer, i.e. the droplet density is preferably 100% at all positions. Even more preferably, the number of dithered virtual layers is greater than the number of non-dithered layers. By including at least one non-dithered layer, it is advantageously possible to smooth the resulting optical structure. The non-dithered layer provides additional droplets which may coalesce into empty positions and with other droplets, thus smoothing the shape of the optical structure. Preferably, the provision of such non-dithered virtual layers is particularly advantageous for optical structures with optical powers larger than 0.2, 0.3 or 0.3 dpt, and in preferably less than 0.7, 0.6 or 0.5 dpt.

According to a preferred embodiment of the present invention, horizontal slicing is additionally applied for optical structures with an optical power between 0.2 dpt and 0.6 dpt, preferably between 0.3dpt and 0.5 dpt. Preferably, virtual layers created by means of horizontal slicing are inserted between dithered virtual layers. More preferably, the number of virtual layers created by means of horizontal slicing is lower than the number of dithered virtual layers. The inventors have found that surprisingly, at least for lenses as optical structures, around 0.3 dpt, depending inter alia on the properties of the printing ink, the known approach comprising horizontal slicing might be equally suitable as the new approach proposed by the present invention. Above around more or less 0.5 dpt, horizontal slicing is preferable, as lenses produced by means of the proposed method of the present invention are heavier than lenses produced by means of horizontal slicing. Hence, it can be particularly advantageous for optical structures comprising an optical power in the range of around 0.3 dpt to 0.5 dpt, combining the newly proposed approach with horizontal slicing is an optimized method which allows for reaping the benefits of both approaches.

According to another preferred embodiment of the present invention, during the first step the thickness of the predetermined shape of the optical structure is determined at every point on the surface of the optical structure, wherein a dithering pattern is applied vertically to regions of the virtual printing pattern. This approach is preferably applied additionally to the stacking of horizontal virtual dithered layers. Yet, is also conceivable that such a vertical dithering could be applied alternatively. Preferably, the thickness is expressed in pixels, wherein even more preferably one pixel (abbreviated as px) roughly corresponds to one droplet of printing ink. By applying such a vertical dithering, it is advantageously possible to achieve a smoothing effect.

Preferably, the vertical dithering patterns of neighboring regions are vertically shifted relative to each other. More preferably, the dithering patterns are shifted randomly. It is thus advantageously ensured that empty positions do not coincide, thus preventing optical and/or material defects of the optical structure. Alternatively, the dithering patterns are shifted according to a predetermined pattern. Depending on the application and in particular for applications in which a relatively small number of layers is printed, it might be more advantageous to devise a predetermined pattern or sequence of shifting the dithering patterns in order to maintain a highly consistent quality of the optical structure.

Preferably, the regions of the vertical dithering patterns comprise areas of 3x3, 4x4, 5x5, 6x6, 7x,7, 8x8, 9x9 or 10x10 droplets and/or pixels. Hence, the vertical dithering is preferably not applied to a single vertical column of droplets, but to a larger number of droplets, thus advantageously ensuring that the dithering pattern may be more effectively applied, ensuring a more even distribution of the dithering.

A further subject-matter of the present invention is a three-dimensional optical structure comprising an optical power less than or equal to 0.5 dpt, wherein it is produced with a method according to the present invention.

The embodiments and advantages described in conjunction with this subject-matter of the present invention also apply to the further subject-matter of the present invention and vice versa.

Preferably, the optical power of the optical structure is low, more preferably less than 0.7, 0.6, 0.5, 0.4 or 0.3 dpt.

It is hence advantageously possible to provide a three-dimensional optical structure which comprises a relatively low optical power and/or a relatively low thickness and which is produced by three-dimensional printing without exhibiting a noticeable staircase effect.

According to a preferred embodiment of this subject-matter of the present invention, a base optical structure, for example a base lens, is provided and the three-dimensional optical structure is placed upon the base optical structure. More preferably, the optical structure is produced such that it is compensated for a difference between a predetermined shape and/or contour of the base optical structure and a measured shape and/or contour of the base optical structure. Even more preferably, the base optical structure is a lens blank.

According to a further preferred embodiment of this subject-matter of the present invention, the base optical structure is produced by means of additive manufacturing, for example three-dimensional printing and/or injection-molding. Preferably, the optical structure is printed upon the base optical structure.

### BRIEF DESCRIPTION OF THE DRAWINGS

- **Figure 1**: shows a schematical depiction of the problem underlying the present invention;
- **Figure 2a**: shows a microscopic image of a lens produced with a method according to the state of the art;
- **Figure 2b**: shows a microscopic image of a lens produced with a method according to the present invention;
- **Figure 3**: shows a schematic representation of a virtual layer according to an exemplary embodiment of the present invention;
- **Figure 4**: shows a schematic depiction of an advantageous embodiment of the method according to the present invention; and
- **Figure 5**: shows a schematical depiction of a further advantageous embodiment of the method according to the present invention.
- **Figures 6a and 6b**: show a schematical comparison between a virtual printing pattern of an optical structure printed with a method according to the state of the art and a virtual printing pattern of an optical structure printed with a method according to the present invention.

### DETAILED DESCRIPTION

The present invention will be described with respect to particular embodiments and with reference to the drawings, but the invention is not limited thereto but only limited by the claims. The drawings described herein are generally only schematic and are non-limiting. In the drawing, the sizes may be exaggerated and non-proportional and may not be drawn to scale for illustrative purposes.

Where an indefinite or definite article is used when referring to a singular noun, e.g. "a", "an", "the", this includes a plural of that noun unless something else is specifically stated.

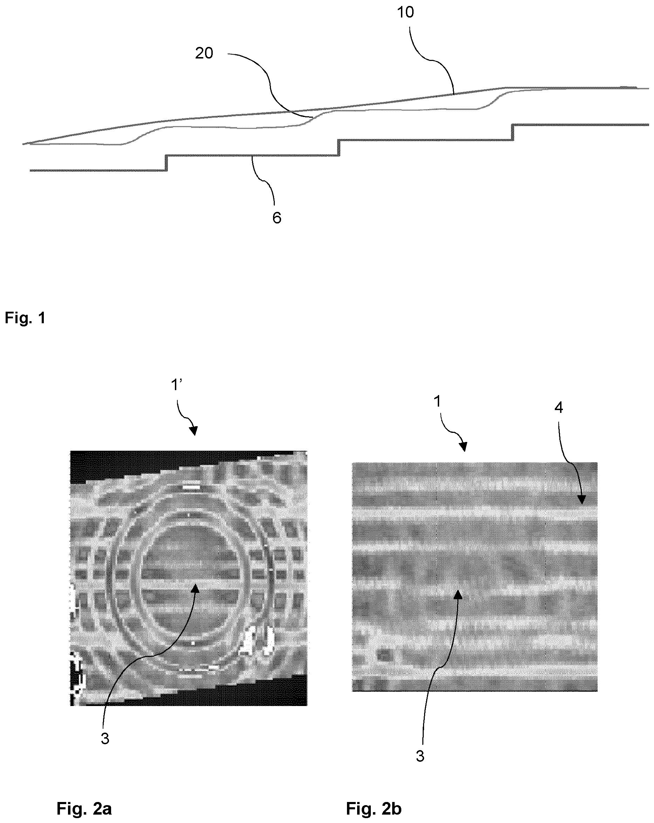

In **Figure 1****,** a schematical depiction of the problem underlying the present invention is shown. The present invention deals with a particular problem which may be encountered with three-dimensional printing of optical structures 1, 1' (shown also in Figures 2a and 2b) . One such an optical structure 1 is a lens 1, e.g. an ophthalmic lens, which may inter alia be used for the correction of a user's vision impairment. Because a lens is usually a rotationally symmetric object with a known and easily described shape, the invention will subsequently be described while referring to the preferred embodiment of the optical structure 1 being a lens 1. Yet, the present invention is not limited to a lens 1, but may be applied to various kinds of optical structures 1, 1'.

According to the present invention, the optical structure 1 and in particular the lens 1 is preferably produced by means of three-dimensional printing. Printing systems used for three-dimensional printing are well known and are therefore not shown within the drawings nor explained in detail. In short, such a printing system usually comprises a printer, e.g. a multi-jet inkjet printer, with at least one print head comprising at least one nozzle, preferably a plurality of nozzles, at least one reservoir for holding and providing a printing ink to the print head and a controller for controlling at least the print head according to predetermined printing data. Such printing data preferably a virtual printing pattern as will be described below. The virtual printing pattern preferably tells the print head at which precise locations droplets of printing ink are to be deposited spatially, wherein the controller controls the print head in accordance with the virtual printing pattern such as to subsequently build up the optical structure 1, preferably layer by layer by ejecting droplets of printing ink from the nozzle(s) along a predetermined trajectory and depositing these droplets of printing ink at least partially side by side. Subsequent layers are deposited in a similar manner at least partially on top of the previous layer.

The printing ink preferably comprises a photo-polymerizable monomer, which may be cured by irradiation, e.g. by ultraviolet (UV) light, infrared (IR) light and/or heat. Curing will initiate polymerization of the monomer and hence cause solidification. According to the specific layer shape and/or the specific requirements, a curing step, in particular a pin curing step, can be performed after depositing a droplet, after depositing a layer, after depositing parts of a layer and/or after finishing multiple layers.

A well-known three-dimensional printing technique, which may be used within the context of the present invention is multi-pass printing. In multi-pass printing mode, a layer is divided into sublayers. During each pass of the print head (e.g. a movement in one linear direction, wherein preferably moving back in the opposite direction constitutes another pass), a sublayer is printed. Thus, a layer is printed in multiple substeps, wherein during each substep, a sublayer is printed. Each sublayer may be cured after printing or a curing step is performed after a predetermined number of substeps.

The optical structure 1, 1' to be printed is at least partially described by its geometrical properties, in particular its shape, and its optical properties. For a lens and in particular an ophthalmic lens, the most important optical property is its optical power P, which is defined as the reciprocal of the focal length of the optical structure 1, 1'. The unit of the optical power is the dioptre, which is abbreviated as dpt.

Usually, the optical power increases when the thickness of the lens increases. Hence, a relatively thick lens will comprise a relatively high optical power (e.g. greater than 1 dpt), whereas a relatively thin lens will comprise a relatively low optical power (e.g. smaller than 0.5 dpt).

According to the state of the art, the commonly used method for creating printing data consists in dividing the predetermined shape 10 or form of the optical structure 1, 1' into parallel layers of substantially equal thickness. This is called slicing. As this slicing is usually done horizontally the resulting layers are called horizontally sliced layers 6. The outline of such horizontally sliced layers 6 is schematically shown in **Figure 1****.** As the diameter of the lens decreases from the bottom to the top, the diameter of the layers 6 decreases as well and there is a certain distance from the edge 4 of a previous layer 6 and the edge 4 of a subsequent layer 6.

Especially when printing lenses 1' with relatively low optical power, in particular less than 0.5 dpt, the lens is made up of only very few such sliced layers 6. Thus, the distance between subsequent edges 4 is relatively large. Therefore, when the lens 1' is printed according to the printing data comprising the horizontally sliced layers 6, even with additional compensation techniques for smoothing, the transition between the edges 4 will still be noticeable when the shape of the lens 1' is measured. In **Figure 1**, the predetermined shape of the lens 10 is compared to the horizontally sliced layers 6, which are only virtual and do not exist physically, and the measured shape of the lens 20. The transitions between the edges 4 are easily discernible. Because they resemble stairs of a staircase, this is called "staircase effect".

This staircase effect is hence particularly pronounced for lenses with relatively low optical power, which are also called low power lenses.

**Figure 2a** shows a microscopic image of a lens 1' produced with a method according to the state of the art. While the horizontal lines are an artefact which is irrelevant for present discussion and may therefore be ignored, the circular lines around the center 3 of the lens 1' represent the transitions between the edges 4 and clearly show that the lens 1', which is three-dimensionally printed with methods according to the state of the art, exhibits a noticeable staircase effect. The present invention now aims at reducing or even avoiding this staircase effect.

In **Figure 2b****,** a microscopic image of a lens 1 produced with a method according to the present invention is shown. Again, the horizontal lines may be ignored as they merely show a printing artefact. It is immediately obvious that the lens 1 produced in accordance with the present invention does not exhibit a (noticeable) staircase effect. This proves the feasibility of the method according to the present invention. The inventors have found out that with the subsequently explained method, the staircase effect can effectively be suppressed in particular for lenses 1 with an optical power between 0 dpt and 0.3, together with additional compensation techniques up to around 0.5 dpt.

The inventive concept lies within a different approach to creating a virtual printing pattern. Instead of using horizontal slicing, the invention proposes using a dithering approach for creating a virtual printing pattern. Dithering - or dither - more generally means introducing noise in order to randomize an error in order to prevent patterns. This is most commonly known form audio, video and image processing, but has also been applied to three-dimensional printing as an error compensation approach, i.e. additional to horizontal slicing.

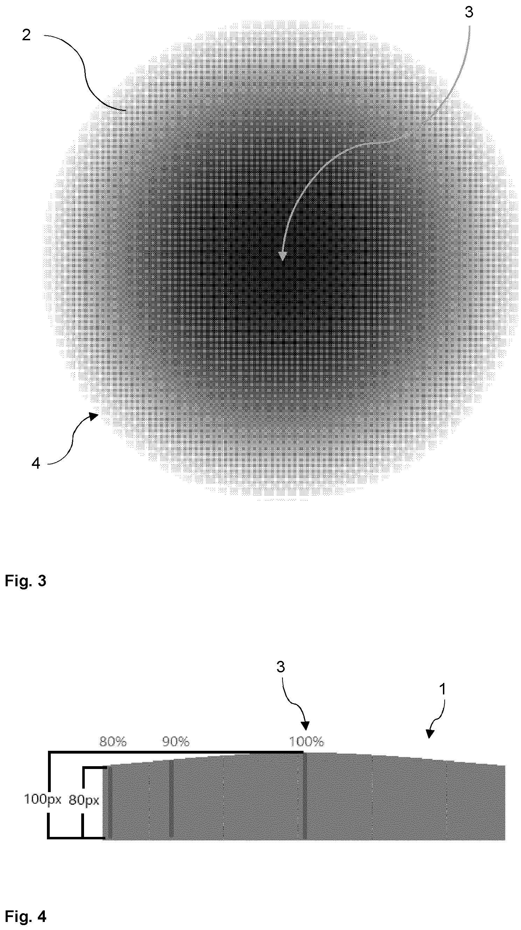

In **Figure 3**, a schematic representation of a virtual layer 2 according to an exemplary embodiment of the present invention is depicted. Again, this embodiment relates to the (three-dimensional) printing of a circular and convex lens 1, hence the lens 1 comprises a center 3 and a circumferentially extending edge 4 at a predetermined constant diameter.

The idea lies in creating a virtual layer 2 which comprises the predetermined contour, here the diameter of the lens 1, and applying a dithering pattern such that the droplet density is maximal in a first region, here e.g. the center 3, wherein the droplet density, in particular steadily, decreases, here in a radially outwards direction, until a minimum value of the droplet density in a second region, here e.g. at the outer edge 4 of the predetermined shape. The minimal droplet density at the edge 3 needs to be greater than 0% so that not singular individual droplets are printed. Instead, the droplets need to be interconnected in order to create the coherent optical structure 1. The minimal droplet density required for this depend on the properties of the printing ink used. For an exemplary printing ink, this threshold is preferably greater than 10%. Here, the droplet density at the edge 4 of the virtual layer 2 is about 30%. The maximal droplet density may be around 100% of a predetermined droplet density.

As a mere example, if the lens 1 is supposed to comprise a diameter of 65 mm, one single layer will then comprise an optical power of about 0.01 dpt. In this example, in order to print a lens 1 with an optical power of 0.1 dpt, about ten virtual layers 2 are required.

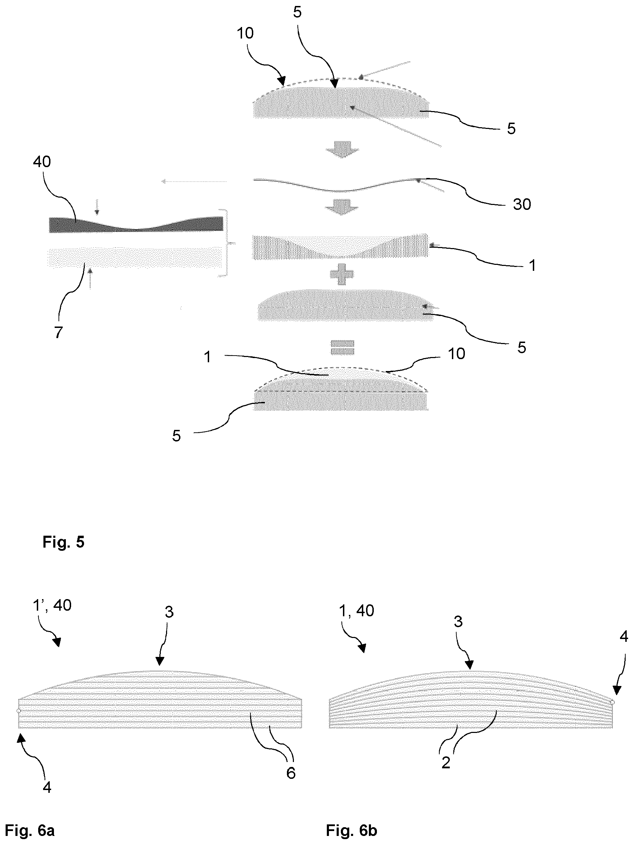

The virtual printing pattern 40 (shown also in Figure 5) is thus preferably created by stacking substantially identical virtual layers 2 until the calculated optical power achieved by stacking the virtual layers 2 equals the predetermined optical power of the lens 1.

Since in practice most lenses 1 comprise optical powers of at least 0.1 dpt, usually a plurality of virtual layers 2 will be stacked to create the virtual printing pattern 40, although theoretically and preferably, the method may be performed with only one such virtual layer 2.

If multiple virtual layers 2 are stacked, they comprise the same center 3 and their edges 4 are congruent.

The decreasing droplet density means that the virtual printing pattern 40 comprises locations at which no droplets are supposed to be deposited. At these positions or locations, adjacent droplets are given room to coalesce and spread, thus lowering the thickness.

Yet, if identical layers were simply stacked upon each other, positions at which no droplets are deposited would add up and could potentially cause defects in the lens 1.

Thus, according to a preferred embodiment of the present invention, subsequent virtual layers 2 are shifted with regard to each other so that the empty positions are distributed evenly. Here, for the circular lens 1, subsequent virtual layers 2 are preferably rotated around their common center 3 relative to each other, in particular either according to a predetermined sequence/pattern or randomly.

Thus, a random and consequently, for the entire virtual printing pattern 40, homogenous distribution of empty locations, i.e. positions at which no droplets are deposited, is achieved.

This means that no vertically stacked horizontally sliced layers 6 are required, instead, dithered layers are superimposed, i.e. stacked, until the predetermined shape and/or the predetermined optical power of the lens 1 is reached. Thus, the virtual printing pattern 40 is obtained and a printer may print the lens 1 according to the virtual printing pattern 40.

As becomes apparent from the above explanations, for lenses with a relatively high optical power, in particular much greater than 0.5 dpt, this approach requires a large number of virtual layers 2, thus producing a relatively thick lens 1. Consequently, the method according to the present invention is preferably applied predominantly for optical structures 1 comprising an optical power of at the most 0.3 dpt.

It has been found that by additional compensation techniques, with a modified approach, this threshold may be increased up to about 0.5 dpt.

Optical structures 1 with optical powers larger than 0.5 dpt, are preferably produced with methods according to the state of the art.

One such modification could be to add "full layers", i.e. non-dithered layers, intermittently between the dithered virtual layers 2.

In **Figure 4****,** a schematic depiction of an advantageous embodiment of the method according to the present invention is illustrated. This approach may advantageously be applied additionally to the stacking of the dithered virtual layers 2. A detail of a lens 1 is shown including its center 3. For most convex lenses 1, the thickness of the lens 1 is maximal at its center 3. The person skilled in the art understands that for a non-circular optical structure 1' and/or an optical structure 1' whose thickness is not maximal at its center 3, the approach may be applied analogously. In particular, the approach of the present invention may also be applied to concave lenses, where the minimal thickness is at or around the center and the maximal thickness is at or around the edge region of the lens. In the case of a concave lens, the first region is the outer edges of the lens or the corresponding virtual layer and the second region is the center or preferably at least near the center of the lens. For freeform lenses, in which the first region is not (exactly) at the center, the explanations apply correspondingly.

Now, for certain regions across its lateral extension, the predetermined thickness of the optical structure 1 is determined. Here, as a mere example, two such regions are shown which comprise a thickness of 90% or 80% of the maximal thickness. For reasons of simplicity, it is here assumed that the center comprises a thickness of 100 px, which may preferably correspond to 100 droplets of printing ink. Consequently, in this example, the marked regions comprise a thickness of 90 px or 80 px, respectively.

Preferably, the regions comprise a lateral extension of e.g. about 8x8 px. For those regions, a further dithering pattern is applied vertically. As for the horizontally applied dithering pattern, adjacent columns are preferably vertically shifted relative to each other, in particular randomly, so that empty positions do not add up. By additionally applying a vertical dithering approach, a smoothing effect may advantageously be obtained.

In **Figure 5****,** a schematical depiction of a further advantageous embodiment of the method according to the present invention is illustrated. This corresponds to a particularly advantageous application for optical structures 1 produced by a method according to the present invention.

Three-dimensionally printing an entire lens with a regular optical power is time-consuming and potentially error-prone. It is known to use pre-produced base optical structures 5, here e.g. a base lens 5 such as a lens blank, and modify these base optical structures 5 to obtain the required optical structure 1.

Such a base lens 5 does not comprise the predetermined shape 10 and/or the predetermined optical power. The difference between the predetermined shape 10 and the measured shape 20 of the base lens 5 is determined and may be considered as a difference profile 30, or as an error profile.

The base lens 5 may in turn be produced by additive manufacturing, in particular by three-dimensional printing and/or injection-molding.

The goal is now to print a lens whose shape 10 in turn corresponds to the difference profile 30. Such a lens 1 may either be directly printed upon the base lens 5, or it may be produced separately and subsequently placed upon the base lens 5, e.g. by using an adhesive layer between the base lens 5 and the (corrective) lens 1.

Such a lens 1 will usually be relatively thin - although the invention is not limited to such cases - and/or comprise a relatively low optical power such that the method according to the present invention may advantageously be used for its production in order to prevent the lens 1 and consequently the optical structure that results from the combination of the base lens 5 and the lens 1 to exhibit a staircase effect.

Hence, an according virtual printing pattern 40 is created and used for printing the lens 1. This is schematically shown on the left as a combination of a theoretically, i.e. virtual, uncompensated block of printed layers and the virtual printing pattern resulting from the stacking of dithered virtual layers 2. Together, this results in the lens 1 comprising the predetermined shape 1 and/or the predetermined optical power.

The lens 1 is then placed upon the base lens 5 or printed directly on top of the base lens 5. The resulting optical structure then advantageously comprises the predetermined shape 1 and/or the predetermined optical power while not exhibiting any noticeable staircase effect.

Hence, the method according to the present invention may also be regarded as multilayer-volume correction algorithm or approach.

In **Figures 6a and 6b****,** a schematical comparison between a virtual printing pattern of an optical structure 1' printed with a method according to the state of the art and a virtual printing pattern of an optical structure 1 printed with a method according to the present invention. In particular, both depictions show a circular and (plano-)convex lens, i.e. both optical structures 1, 1' comprise a first region and a second region, wherein the first region is the center 3 of the lens and the second region is the outer circumference of the lens, i.e. the outer edges 4.

**Figure 6a** shows a virtual printing pattern created by means of conventional horizontal slicing, as initially explained, i.e. the optical structure 1' is built up by superposing a multitude of horizontal slices 6 of the same thickness.

In contrast, **Figure 6b** shows a virtual printing pattern created by means of the novel approach suggested by the present invention. The optical structure 1 is created by superposing a multitude of substantially identical virtual layers 2 which in the present case comprise a dithering pattern with a maximal droplet density at the center 3 and a minimal droplet density at the outer edges 4.

### REFERENCE SIGN LIST

- 1, 1': optical structure, lens
- 2: virtual layer
- 3: center
- 4: edge
- 5: base optical structure, base lens
- 6: horizontally sliced layer
- 7: virtual uncompensated printed layers

- 10: predetermined shape of optical structure
- 20: measured shape of base optical structure
- 30: difference between predetermined and measured shape of base optical structure
- 40: virtual printing pattern, compensation profile

## Claims

1. Method for producing a three-dimensional optical structure (1), the optical structure comprising a predetermined optical power and a predetermined shape (10), wherein in a first step a virtual layer (2) for the optical structure (1) is determined, wherein the virtual layer (2) comprises the shape and/or contour of the optical structure (1), wherein a dithering pattern is applied to the virtual layer (2) such that a droplet density in a first region is greater than a droplet density in a second region, wherein wherein in a second step the virtual layer (2) is vertically stacked until the predetermined optical power of the optical structure (1) is reached to create a virtual printing pattern (40), wherein in a third step the optical structure (1) is printed according to the virtual printing pattern (40) by depositing one or more layers of printing ink through targeted placement of droplets of printing ink at least partially side by side and/or at least partially on top of each other.

2. Method according to claim 1, wherein the optical structure is a lens.

3. Method according to claim 1 or 2, wherein the droplet density in the first region is maximal, wherein the droplet density in the second region is minimal.

4. Method according to any one of the preceding claims , wherein the first region is the center (3) of the virtual layer (2) or the outer edges (4) of the virtual layer (2) and/or wherein the second region is the outer edges (4) of the virtual layer (2) or the center (3) of the virtual layer (2).

5. Method according to any one of the preceding claims, wherein the droplet density in the second region is greater than 0%, preferably greater than 10%, more preferably greater than 30% of a maximal droplet density and/or wherein the droplet density in the first region is greater than 80%, preferably greater than 90%, more preferably greater than 95% and in particular about 100% of the maximal droplet density.

6. Method according to any one of the preceding claims, wherein the optical power of the optical structure (1) is smaller than or equal to 0.5 dpt.

7. Method according to any one of the preceding claims, wherein before the first step a base optical structure (5), preferably a base lens (5), is provided and a difference between a shape and/or optical power of the base optical structure (5) and a predetermined shape and/or optical power of the base optical structure (5) is measured, wherein the predetermined shape (10) and/or the predetermined optical power of the optical structure (1) is chosen such that the measured difference (30) is compensated, wherein preferably the optical structure (1) is printed on top of the base optical structure (5) or is printed separately and placed on the base optical structure (1).

8. Method according to claim 7, wherein the base optical structure (5) is at least partially three-dimensionally printed and/or injection-molded.

9. Method according to any one of the preceding claims, wherein at least one of the virtual layers (2) is shifted, in particular rotated around the center (3) of the optical structure and/or the virtual layer (2), with regard to the other virtual layers (2) during the second step.

10. Method according to any one of the preceding claims, wherein at least one non-dithered virtual layer is interposed between the stacked virtual layers (2).

11. Method according to any one of the preceding claims, wherein horizontal slicing is additionally applied for optical structures (1) with an optical power between 0.2 dpt and 0.6 dpt, preferably between 0.3dpt and 0.5 dpt.

12. Method according to any one of the preceding claims, wherein during the first step the thickness of the predetermined shape of the optical structure (1) is determined at every point on the surface of the optical structure (1), wherein a dithering pattern is applied vertically to regions of the virtual printing pattern (40).

13. Method according to claim 12, wherein the vertical dithering patterns of neighboring regions are vertically shifted relative to each other.

14. Method according to claim 12 or 13, wherein the regions of the vertical dithering patterns comprise areas of 3x3, 4x4, 5x5, 6x6, 7x,7, 8x8, 9x9 or 10x10 droplets and/or pixels.

15. Three-dimensional optical structure (1) comprising an optical power less than or equal to 0.5 dpt, **characterized in that** it is produced with a method according to any one of the preceding claims.
